(19) Europäisches Patentamt
European Patent Office
Office européen des brevets

(11) **EP 2 038 585 B1**

(12) **EUROPEAN PATENT SPECIFICATION**

(45) Date of publication and mention
of the grant of the patent:
**16.09.2015 Bulletin 2015/38**

(51) Int Cl.:
***F25D 29/00*** *(2006.01)*          ***F25B 49/02*** *(2006.01)*
***F24F 11/00*** *(2006.01)*

(21) Application number: **07825328.3**

(22) Date of filing: **28.06.2007**

(86) International application number:
**PCT/IB2007/003018**

(87) International publication number:
**WO 2008/001227 (03.01.2008 Gazette 2008/01)**

(54) **CONVEYING TEMPERATURE INFORMATION IN A CONTROLLED VARIABLE SPEED HEATING, VENTILATION, AND AIR CONDITIONING (HVAC) SYSTEM**

FÖRDERTEMPERATURDATEN IN EINEM GESTEUERTEN ERHITZUNGS-, BELÜFTUNGS- UND KLIMAANLAGENSYSTEM MIT VARIABLER GESCHWINDIGKEIT

ACHEMINEMENT D'INFORMATIONS DE TEMPÉRATURE DANS UN SYSTÈME DE CHAUFFAGE, DE VENTILATION ET DE CLIMATISATION (HVAC) COMMANDÉ À VITESSE VARIABLE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **28.06.2006 US 427161**

(43) Date of publication of application:
**25.03.2009 Bulletin 2009/13**

(73) Proprietor: **Computime Ltd.
Wanchai, Hong Kong (HK)**

(72) Inventors:
• **HA, Wai-Leung
555 Victoria Road, Pokfulam (HK)**

• **CHENG, Chung, Ming
Tsuen Wan (HK)**
• **LEI, Kairy, Kei
Shenzhen (HK)**

(74) Representative: **Serravalle, Marco
Serravalle SAS
Via G. Matteotti, 21/23
26854 Cornegliano Laudense (LO) (IT)**

(56) References cited:
| | |
|---|---|
| **CN-A- 1 414 313** | **CN-Y- 2 215 091** |
| **GB-A- 2 260 785** | **JP-A- 03 218 803** |
| **JP-A- 59 077 245** | **JP-A- 2000 330 649** |
| **US-A- 4 856 286** | **US-A- 5 115 968** |
| **US-A- 5 309 730** | **US-A- 6 134 901** |

**Description**

FIELD OF THE INVENTION

The present invention relates generally to the field of controlling a variable speed heating, ventilation, and air conditioning (HVAC) system, and more particularly to sending a signal that conveys a temperature difference from a thermostat unit to a controller unit.

BACKGROUND OF THE INVENTION

With the price of energy steadily increasing, there is an increasing need to enhance the efficiency of heating, ventilation, and air conditioning (HVAC) systems. One approach to increase the efficiency of a HVAC system is to incorporate a variable speed controlled compressor in the system for the cooling function. The latest technology typically employs a sophisticated microprocessor controller unit (MCU) and a digital signal processor (DSP) to support a high performance inverter type variable speed controlled compressor. The speed (revolutions per unit time) of a variable speed controlled compressor depends on the temperature difference of the set temperature (typically set at a thermostat) and the ambient temperature of the temperature-controlled room. In general for the cooling function when the ambient temperature is higher than the set temperature, the higher the temperature difference, the faster the compressor should run.

A typical thermostat can provide only a simple ON/OFF control of the 24V AC to a compressor controller that controls that compressor. However, with this control mechanism, a variable speed controlled compressor will not typically function at their maximum efficiency. Consequently, there is a need for apparatuses and methods that enable the typical thermostat to properly control a variable speed controlled compressor.

SUMMARY OF THE INVENTION

The present invention provides methods and apparatuses that support the transfer of data from a thermostat unit to a controller unit to control the speed of a compressor of an air conditioner unit or a blower motor of a furnace. The invention is implemented by a system according to claim 1.

With an aspect of the invention, the duty cycle of a signal that is sent from a thermostat unit to a compressor controller unit is adjusted in accordance with a temperature difference between the ambient temperature of an environmentally controlled space and a set temperature. The compressor controller unit measures the duty cycle to determine the temperature difference and adjusts the compressor speed in accordance with the temperature difference. US-4856 286 and US-5309730 disclose duty cycle compressor controller units.

With another aspect of the invention, the duty cycle of a signal that is sent from a thermostat unit to a furnace controller unit is adjusted in accordance with a temperature difference between the ambient temperature of an environmentally controlled space and a set temperature. The furnace controller unit measures the duty cycle to determine the temperature difference and adjusts the speed of a blower motor in accordance with the temperature difference.

With another aspect of the invention, the change in hardware at both the thermostat side and the compressor controller side is minimized. An AC line (e.g., 24 volts) is used to transfer data in a signal sent from the thermostat side to the compressor controller side. The signal is switched on and off, in which the AC waveform is conducted and blocked by the thermostat unit and received by the compressor controller. Consequently, existing wiring can be used without modifications.

With another aspect of the invention, a thermostat unit instructs a compressor controller unit to stop operation immediately in an emergency situation by sending a signal with a pulse or pulses having a short time duration.

With another aspect of the invention, a compressor controller unit measures the duty cycle of a received signal, determines the temperature from the duty cycle, and adjusts the compressor speed from a predetermined relationship. The compressor speed is related to the temperature difference, in which the compressor controller unit may access a lockup table using an address determined by the temperature difference.

With another aspect of the invention, a pulse width modulated (PWM) controller is instructed by a microprocessor control unit to generate control pulses for the compressor so that the compressor runs at a desired speed. The PWM controller configures an IGBT (insulated-gate bipolar transistor) array so that an appropriate pulse stream is provided to the compressor.

BRIEF DESCRIPTION OF THE DRAWINGS

The foregoing summary of the invention, as well as the following detailed description of exemplary embodiments of the invention, is better understood when read in conjunction with the accompanying drawings, which are included by way of example, and not by way of limitation with regard to the claimed invention.

Figure 1 shows a thermostat unit for controlling a variable speed compressor in accordance with an embodiment of the invention.

Figure 2 shows a signal that is sent from a thermostat unit to a compressor controller unit for controlling a variable speed compressor in accordance with an embodiment of the invention.

Figure 3 shows a compressor controller unit for controlling a variable speed compressor in accordance with an embodiment of the invention.

Figure 4 shows a relationship between a temperature difference, referencing an ambient temperature to a set temperature, and a duty cycle of a signal in accordance with an embodiment of the invention.

Figure 5 shows a relationship of a determined compression speed and the temperature difference in accordance with an embodiment of the invention.

Figure 6 shows a flow diagram that is executed by the thermostat unit in accordance with an embodiment of the invention.

Figure 7 shows a flow diagram that is executed by the compressor controller unit to initiate processing of the signal, as shown in Figure 2.

Figure 8 shows a flow diagram that is executed by the compressor controller unit to process the signal, as shown in Figure 2, during a time period.

Figure 9 shows an exemplary configuration for controlling a variable speed compressor.

DETAILED DESCRIPTION OF PREFERRED EMBODIMENTS

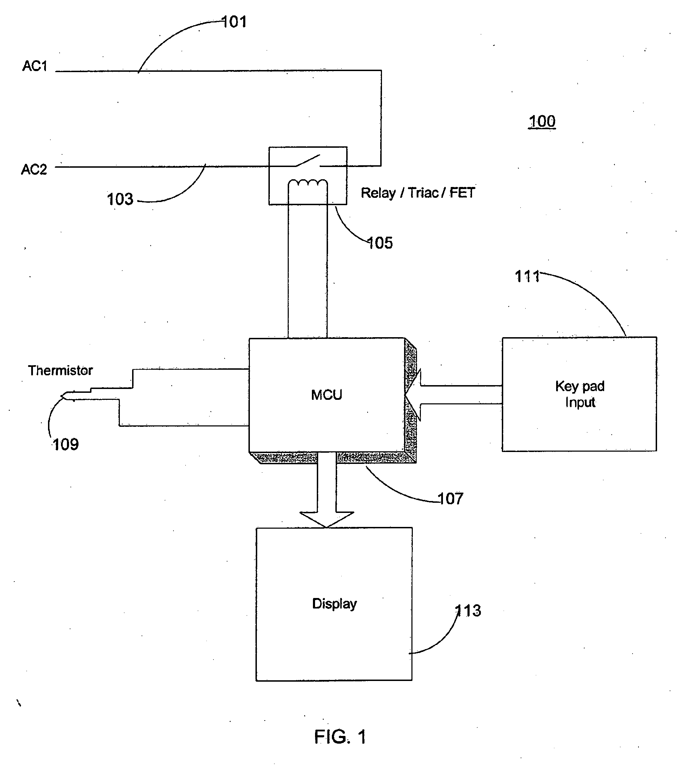

Figure 1 shows a thermostat unit 100 for controlling a variable speed compressor (not shown) in accordance with an embodiment of the invention. Thermostat unit 100 includes microprocessor control unit (MCU) 107 and switching module 105. Switching module 105, which electrically turns on and off, may be implemented with a relay, triac, or field effect transistor (FET). Additionally, thermostat unit 100 may include keypad input 111 in order for a user to input a set temperature or a profile of set temperatures (as will be discussed) and display 113 to display the ambient temperature of a controlled space (e.g., a room) and the set temperature.

Microprocessor control unit 107 measures the ambient temperature of the controlled space with thermistor 109, which is situated in an appropriate point of the controlled space. Microprocessor control unit 107 consequently determines a difference temperature ($T_{diff}$) by subtracting the set temperature ($T_{set}$) from the ambient temperature ($T_{amb}$):

$$T_{diff} = T_{amb} - T_{set} \qquad\qquad (EQ.\ 1)$$

In the embodiment shown in Figure 1, switching module 105 is either in the "on" state or the "off" state. When in the "on" state, electrical conductivity is completed from line 101 to line 103 and an AC waveform (typically 24 volts AC) is provided to a compressor (for cooling) to a furnace control board (for heating). When in the "off" state, electrical conductivity is blocked. In the following discussion, the thermostat is supporting the cooling function (i.e., by communicating with a compressor controller to control a compressor as will be discussed).

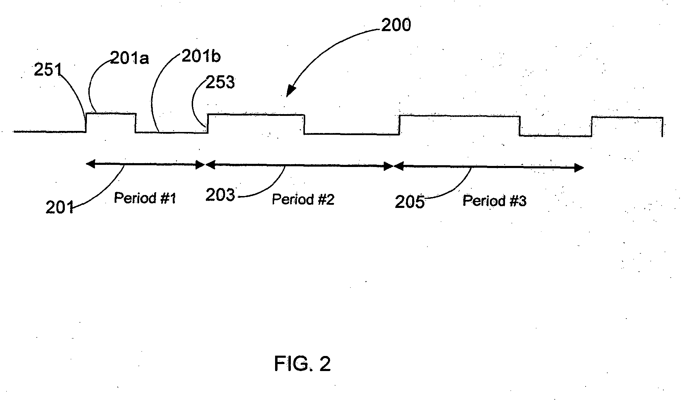

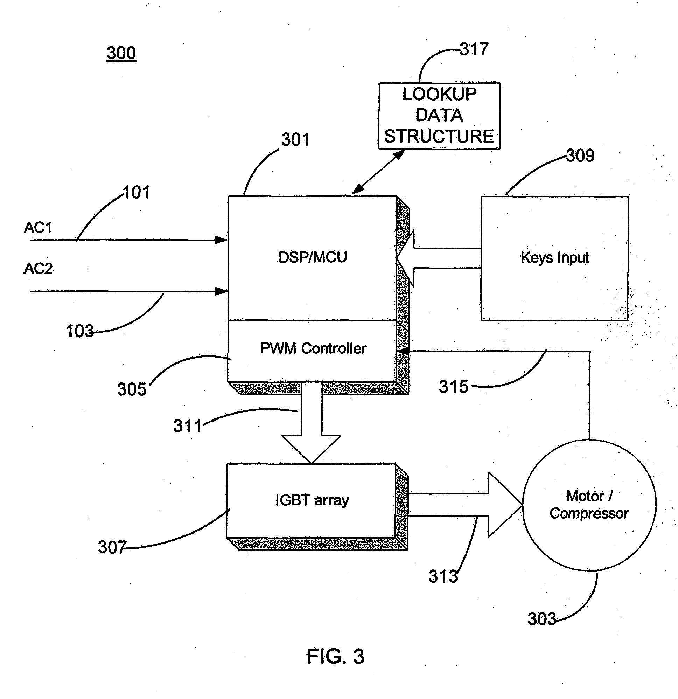

Because switching module 105 is either on or off, only two states are directly supported. However, in accordance with an aspect of the invention, information that is indicative of $T_{diff}$ is transmitted from thermostat unit 100 to compressor controller unit 300 (as shown in Figure 3 by varying the duty cycle of a signal (e.g., signal 200 as shown in Figure 2) that is conveyed by lines 101, 103.

In an embodiment of an invention, thermostat unit 100 sends a special signal that has a short pulse duration to notify a furnace/air conditioner controller to immediately stop operation. For example, the special signal can be four consecutive pulses with 1 second on and 1 second off.

Figure 2 shows signal 200 that is sent from a thermostat unit 100 (as shown.in Figure 1) to a compressor controller unit 300 (as shown in Figure 3) for controlling a variable speed compressor 303 (as shown in Figure 3) in accordance with an embodiment of the invention. Signal 200, as shown in Figure 2, spans a time duration over time periods 201, 203, and 205.

During each time period 201, 203, 205, signal 200 is being electrically conducted during an activated time duration ($T_{on}$) (e.g., activated time duration 201a for time period 201) and electrically blocked during an deactivated time duration ($T_{off}$) (e.g., deactivated time duration 201b for time period 201). During activated time duration 201a, AC power (corresponding to a 24 volts AC waveform) is conducted. During deactivated time duration 201b, AC power is not conducted. The corresponding duty cycle is determined by:

$$Duty\_Cycle = \frac{T_{on}}{T_{on} + T_{off}} \qquad (EQ. 2)$$

In an embodiment of the invention, thermostat unit 100 notifies compressor unit 300 the value of $T_{max}$ by sending a configuration signal having a preamble followed by a number of pulses, in which the number of pulses is indicative of the value of $T_{max}$. In an exemplary embodiment, the preamble comprises a predetermined pulse sequence of two ON time periods followed by two OFF time periods, each time period being one second. For each ON time period, a pulse is generated for 0.5 second during an ON time period and not generated during an OFF time period. The value of $T_{max}$ (degrees Fahrenheit) is determined from the number of pulses following the preamble by:

$$T_{max} = 2^{\text{(number of pulses + 5)}} \qquad (EQ. 3)$$

Referring to Figure 1, microprocessor control unit 107 controls switching module 105 to turn on and turn off signal 200 based on any period of time. (In fact, as suggested by Figure 2, the time period may vary from one time period to another.) The time period may be 5, 10 or 15 minutes or any other time period.

The duty cycle of signal 200 conveys information about the temperature difference ($T_{diff}$) as determined by microprocessor control unit 107. As suggested by Figure 2, the duty cycle typically varies from one time period to another time period corresponding to temperature difference variations.

In an embodiment of the invention, the temperature difference ($T_{diff}$) is encoded by the duty cycle as follows:

$$Duty\_Cycle = T_{diff} / T_{max} * 50\% + 50\% \qquad (EQ. 4)$$

Combining EQ. 4 and EQ. 2, one can determine the $T_{on}$ by:

$$T_{on} = (T_{diff}/T_{max} * 50\% + 50\%) * T_{cycle} \qquad (EQ. 5)$$

where Cycle $T_{on}$ + $T_{off}$
However, if the temperature difference if greater than $T_{max} - \Delta_{temp}$ or less than $-T_{max} + \Delta_{temp}$, the temperature difference is limited as follows:

$$T_{diff} = T_{max} - 1 \text{ if } T_{diff} >= T_{max} - \Delta_{temp} \qquad (EQ. 6a)$$

$$T_{diff} = -T_{max} + 1 \text{ if } T_{diff} <= -T_{max} + \Delta_{temp} \qquad (EQ. 6b)$$

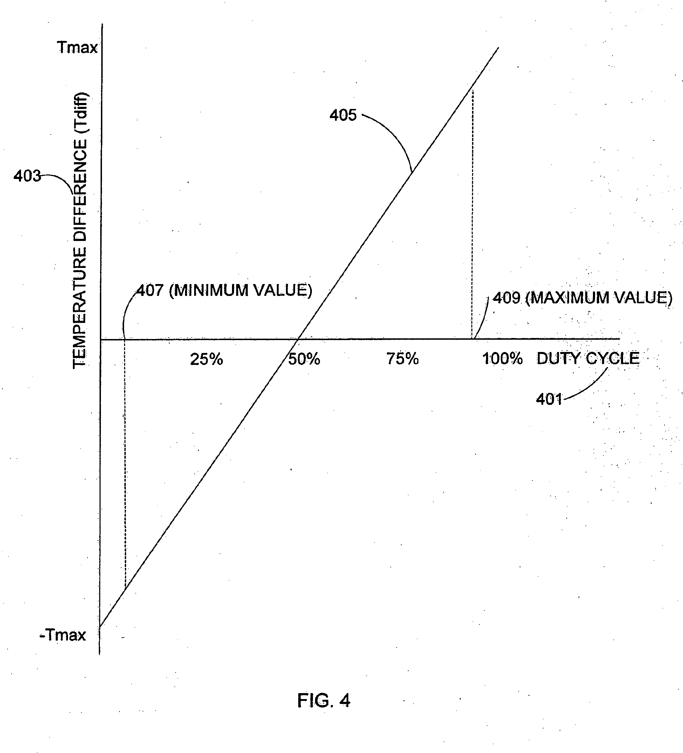

$T_{max} - \Delta_{temp}$ corresponds to maximum value 409 of the duty cycle and $-T_{max} + \Delta_{temp}$ corresponds to minimum value 407 of the duty cycle as shown in Figure 4. The limit of $|T_{diff}|$ is reduced by one degree Fahrenheit in EQ. 6a and EQ. 6b so that the signal is not detected to be ON or OFF all of the time by compressor controller unit 300 when thermostat unit 100 is sending control information. (If signal 200 were ON or OFF all of the time, no signal transitions could be detected.)

Figure 3 shows compressor controller unit 300 for controlling a variable speed compressor 303 in accordance with an embodiment of the invention. Microprocessor control unit (MCU) 301 scans lines 101, 103 for signal 200 and detects a time between two rising signal edges (e.g., signal edges 251 and 253 as shown in Figure 2) to determine the current time period of signal 200. Microprocessor control unit 301 may be coupled with a digital signal processor in order to facilitate calculations.

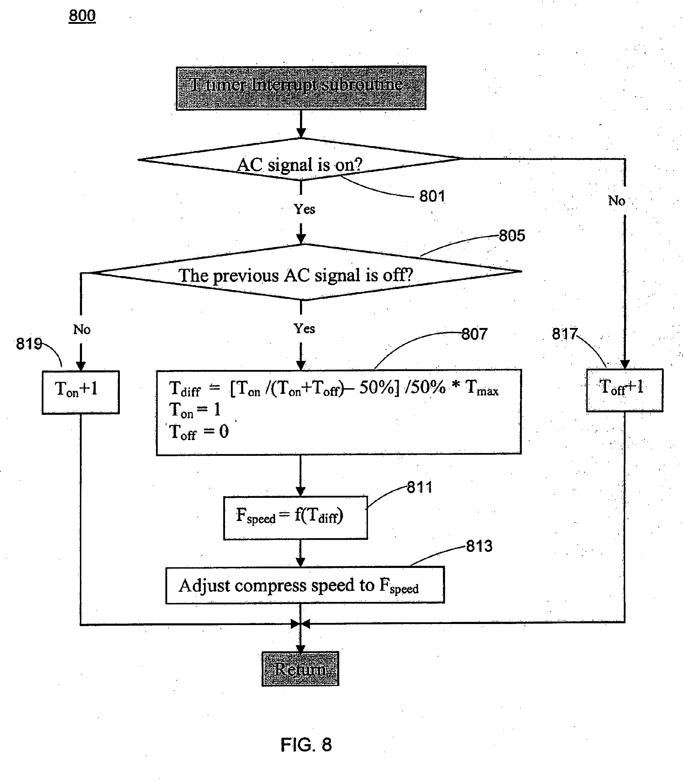

Referring to Figure 2, when processing signal 200, compressor controller unit 300 waits receives duty cycle information for an entire time period before further processing the information. For example, compressor controller unit 300 determines the duty cycle for time period 201 from signal 200 after detecting signal edge 253. Compressor controller unit 300 consequently determines the temperature difference $T_{diff}$, as measured by thermostat unit 100, by decoding signal 200. (As will be discussed with Figure 8, compressor controller unit 300 utilizes flow diagram 800 to measure the duty cycle.) Compressor controller unit 300 measures the duty cycle of signal 200 of the previous time period in accordance with EQ. 2 and determines:

$$T_{diff} = (Measured\_Duty\_Cycle - 50\%) / 50\% * T_{max} \qquad (EQ. 7)$$

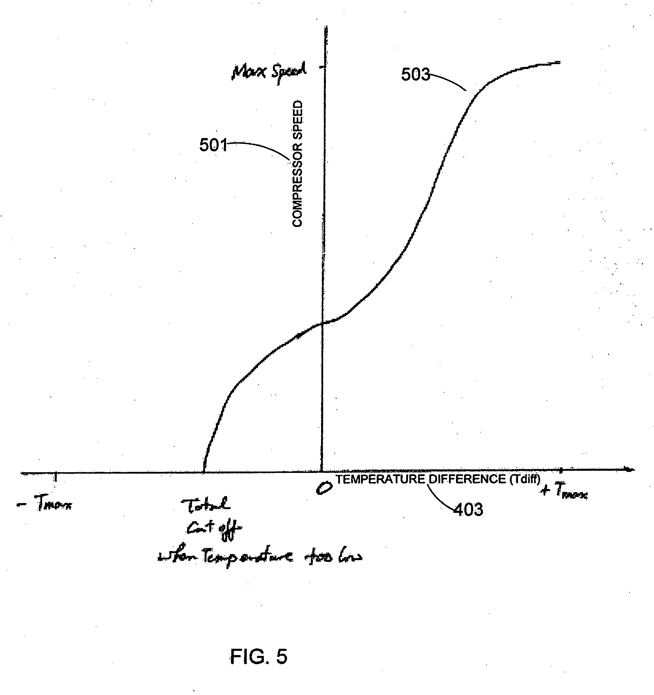

If $T_{diff}$ is positive, variable speed compressor 303 should turn faster based on a predetermined relationship, e.g., relationship 503 as shown in Figure 5 as will be discussed. If $T_{diff}$ is negative, variable speed compressor 303 should turn slower based on an algorithm.

In an embodiment of the invention, compressor control unit 300 obtains $T_{max}$ by a user entering $T_{max}$ through keypad 309. While compressor controller unit 300 may obtain the value of $T_{max}$ from a configuration signal sent by thermostat unit 100, as previously discussed, the value of $T_{max}$ may be entered into keypad 111 by the user. Other embodiments of the invention may utilize a predetermined value of $T_{max}$ that is stored in memory.

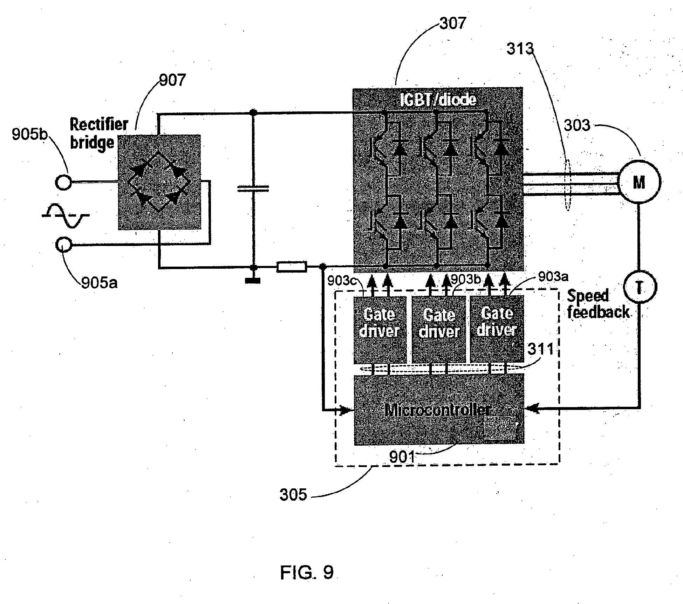

Microprocessor control unit 301 may access lookup data structure 317 in order to determine the temperature difference ($T_{diff}$) and the compressor speed. (As will be discussed, the compressor speed is determined as a function of the temperature difference as shown in Figure 5.) In order to obtain a desired efficiency, compressor 303 typically runs at a higher speed as the temperature difference becomes greater. When the compressor speed has been determined, microprocessor control unit 301 instructs PWM (pulse width modulated) controller 305 to drive IGBT (insulated-gate bipolar transistor) array 307 (via bus 311) so that compressor 303 runs at the desired compressor speed (over bus 313). PWM controller 305 is provided an indication of the actual compressor speed over feedback connection 315 in order to adjust the compressor speed to obtain the desired compressor speed. An exemplary embodiment will be further discussed with Figure 9.

With the exemplary embodiment, compressor controller unit 300 functions with a traditional thermostat design but with software modifications as will be discussed.

Figure 4 shows relationship 405 between temperature difference ($T_{diff}$) 403, referencing an ambient temperature (of an environmentally controlled space where thermistor 109 is located) to a set temperature, and measured duty cycle 401 of a signal in accordance with an embodiment of the invention. In the embodiment shown in Figure 4, relationship 405 is in accordance with EQ. 7, although other embodiments may utilize a different relationship between the temperature difference and the duty cycle. In the example shown in Figure 4, if measured duty cycle 401 equals 25%, temperature difference 403 is determined to equal $-0.5T_{max}$.

As previously discussed, a duty cycle between minimum value 407 and maximum value 409 is utilized in order to facilitate the detection of signal edges by microprocessor control unit 301. In an embodiment of the invention, microprocessor control unit 301 analyzes signal 200 in a time-interrupt basis as shown in Figure 8. Depending on the value of the time interval between interrupts, microprocessor control unit 301 may not detect a transition of signal 200. (Between time-interrupts, microprocessor control unit 301 may be executing other tasks, e.g., diagnostics and executing commands entered through keypad 309.) Consequently, the temperature difference is limited between $T_{max} - \Delta_{temp}$ and $- T_{max} + \Delta_{temp}$ so that signal transitions can be detected. As the time durations between time-interrupts become smaller, the value of $|\Delta_{temp}|$ becomes smaller. If microprocessor control unit 301 processes time-interrupts quickly enough, $\Delta_{temp}$ is essentially zero.

Figure 5 shows relationship 503 of a determined compression speed 501 and the temperature difference 403 in accordance with an embodiment of the invention. Microprocessor control unit 301 measures duty cycle 401 and determines temperature difference 403 using relationship 405. In an embodiment of the invention, microprocessor control unit 301 accesses lookup data structure 317 using an address determined by duty cycle 401 to obtain temperature difference 403. Microprocessor control unit 301 subsequently accesses lookup data structure 317 to determine compression speed 501 using an address determined by temperature difference 403 to obtain compression speed 501. Because the temperature difference typically varies from time period to time period, as suggested by Figure 2, compressor speed 501 consequently varies.

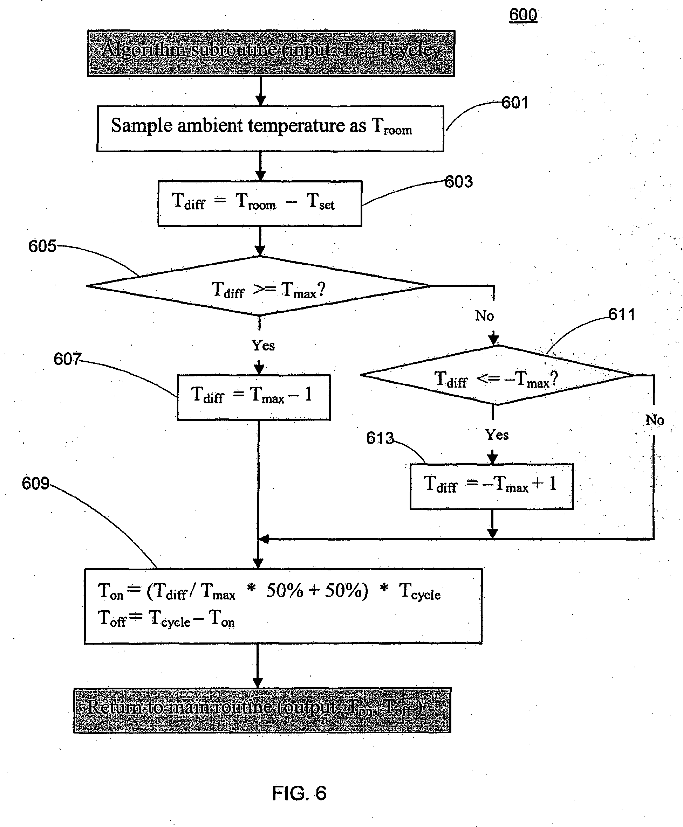

Figure 6 shows flow diagram 600 that is executed by microprocessor control unit 107 in accordance with an embodiment of the invention. Microprocessor control unit 107 obtains the set temperature $T_{set}$, the time period ($T_{cycle}$), and the ambient temperature ($T_{room}$) from thermistor 109 in step 601. In step 603, microprocessor control unit 107 determines the temperature difference ($T_{diff}$) in accordance with EQ. 1. If the temperature difference is larger than the

maximum temperature difference ($T_{max}$), as determined by step 605, the temperature difference is limited to $T_{max}$ - 1 as determined by step 607. Otherwise, step 611 determines whether the temperature difference is less than the negative maximum temperature difference (-$T_{max}$) in step 611. If so, the temperature difference is limited to -$T_{max}$ + 1 in step 613. Otherwise, the activated time duration ($T_{on}$) is determined in accordance with EQ. 5 in step 609. Signal 200 is generated in accordance with $T_{on}$ and $To_{ff}$ as determined by flow diagram 600.

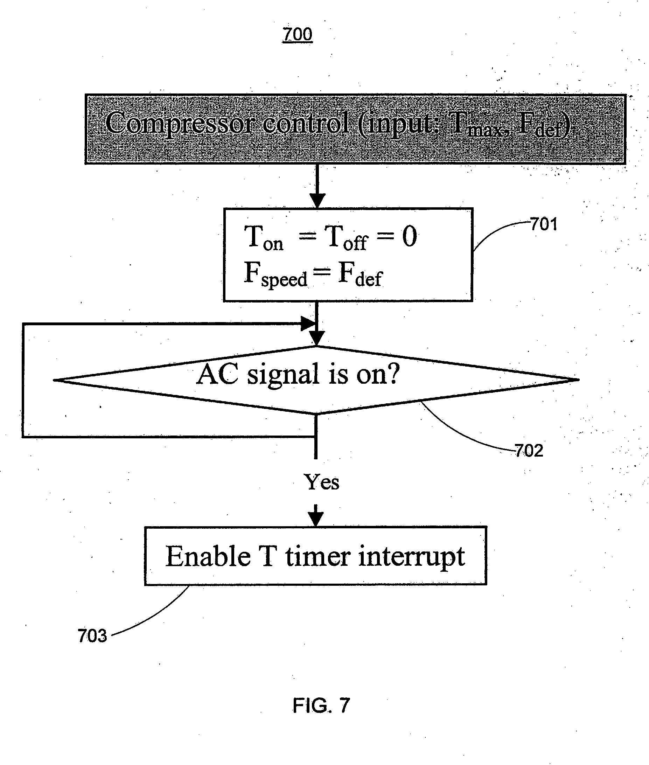

Figure 7 shows flow diagram 700 that is executed by compressor controller unit 300 to initiate processing of signal 200, as shown in Figure 2, during a time period. Microprocessor control unit 301 obtains $T_{max}$ and $F_{def}$ to initiate processing over the current time period. Consequently, microprocessor control unit 301 resets $T_{on}$, $T_{off}$, and sets the compressor speed variable $F_{speed}$ to $F_{def}$ in step 701. In step 702, microprocessor control unit 301 determines whether signal 200 is present (i.e., whether any signal transitions have been detected.) In step 703, interrupts are configured to occur periodically (every $T_{interrupt}$ time interval) so that pulse edges can be detected. For example, if the minimum pulse duration is 1 second (corresponding to an emergency stop), interrupts are configured to occur at least every 0.5 seconds. As will be discussed, procedure 800 (as shown in Figure 8) is processed every $T_{interrupt}$ time interval.

Figure 8 shows flow diagram 800 that is executed by compressor controller unit 300 to process signal 200, as shown in Figure 2, during a time period. In the following discussion, one should note that flow diagram 800 determines whether there are signal edges detected in signal 200. If not, compressor 303 is not active.

In step 801, microprocessor control unit 301 determines if signal 200 is conducting AC power (typically 24 volts AC) during $T_{on}$. If not, the $T_{off}$ counter is incremented in step 817. (In flow diagram 800, $T_{off}$ counter and $T_{on}$ counter are appropriately incremented so that the duty cycle can be determined when flow diagram is respectively executed during the current timer period. Once the current time period is completed, the duty cycle is determined by step 807 as will be discussed.) The process will exit (i.e., flow diagram 800 determines that the air conditioner is not active).

If microprocessor control unit 301 determines that signal 200 is conducting AC power during $T_{on}$ in step 801, microprocessor control unit 301 determines of signal 200 was previously in a non-conductive state (i.e., deactivated time duration 201b for time period 201) in step 805. If not, the $T_{on}$ counter is incremented in step 819, and process 800 is exited. If so, a rising signal edge is detected and step 807 is executed.

In step 807 (corresponding to a rising edge just being detected), the temperature difference is determined in accordance with EQ. 7 for the time period that has just completed. The $T_{on}$ counter and the $T_{off}$ counter are then reset. In step 811, microprocessor control unit 301 determines the speed of compressor 303 in accordance with a predetermined function f($T_{diff}$), e.g., relationship 503 as shown in Figure 5. In step 813, the compressor speed $F_{speed}$ is adjusted, in which microprocessor control unit 301 provides the updated compressor speed to PWM controller 305. Compressor 303 is consequently instructed to change its speed through bus 311, IGBT array 307, and bus 313.

Figure 9 shows an exemplary configuration for controlling variable speed compressor 303. In the exemplary embodiment, compressor 303 comprises a three-phase motor; however, other embodiments may support other types of motors, e.g., single-phase induction motors, DC motors, and universal motors.

Compressor 303 is powered by AC power lines 905a, 905b through rectifier bridge 907 and IGBT array 307. PWM controller 305 configures IGBT array 307 to control compressor 303 at the desired compressor speed. PWM controller 305 includes microcontroller 901 and gate drivers 903a-903c. The speed of compressor 303 is controlled by PWM controller 305, in which the voltage-to-frequency ratio is adjusted with a speed feedback configuration.

Embodiments of the invention support a heating function in a HVAC system. When supporting the heating function a controller unit, in conjunction with a thermostat unit, couples with a variable blower motor of a furnace. The speed of the variable blower motor is varied in accordance with characteristics of the motor and thermodynamics considerations.

As can be appreciated by one skilled in the art, a computer system with an associated computer-readable medium containing instructions for controlling the computer system can be utilized to implement the exemplary embodiments that are disclosed herein. The computer system may include at least one computer such as a microprocessor, digital signal processor, and associated peripheral electronic circuitry.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A system for controlling an air conditioning unit, the air conditioning unit including a variable speed compressor (303), the system comprising:

    a thermostat unit (100) including:

a temperature sensor (109) measuring an ambient temperature of an environmentally controlled space;
a switching module (105) controlling conduction of a signal (200) over a controlled time interval; **characterized by**
a thermostat processing module (107) determining a temperature difference between the ambient temperature and a set temperature, processing the temperature difference between a range between $T_{max}$ and $-T_{max}$, determining a duty cycle corresponding to the temperature difference from the temperature difference divided by said $T_{max}$ times 50% plus 50% (EQ.4), and controlling the switching module (105) in accordance with the duty cycle, the signal being electrically conducted during an activated time duration and electrically blocked during a deactivated time duration over a time period, the duty cycle specifying the activated time duration and the deactivated time duration; and
a compressor controller unit (300) including:

a signal interface module monitoring the signal (200) from the thermostat unit (100); and
a compressor controller processing module (301) determining the duty cycle from the signal (200), determining the temperature difference from the duty cycle, and determining an updated compressor speed from the temperature difference, and instructing the variable speed compressor (303) to function at the updated compressor speed.

2. The system of claim 1, the switching module (105) including an electrical component that electrically closes during the activated time duration and e1ectrically opensdming the electrically closes during the activated time duration and electrically opens during the deactivated time duration.

3. The system of claim 1, the thermostat processing module (107) setting the temperature difference to a positive limited value (EQ.6a) when the temperature difference is greater than approximately $T_{max}$ and setting the temperature difference to a negative limited value when the temperature is less than approximately $-T_{max}$ (EQ.6b).

4. The system of claim 1, the thermostat processing module (107) sending a pulse having a pulse duration less than a minimum value when decoding the duty cycle as zero, the pulse being conveyed by the signal (200).

5. The system of claim 4, the compressor controller processing module (301) decoding the signal (200) corresponding to the duty cycle as being zero when the pulse duration is less than the minimum value.

6. The system of claim 1, the thermostat processing module (107) sending a predetermined pulse pattern that designates an emergency stop, the predetermined pulse pattern being conveyed on the signal.

7. The system of claim 6, the compressor controller processing module (107) decoding the signal corresponding to the emergency stop and instructing the variable speed compressor (303) to stop rotating.

8. The system of claim 1, the switching module (105) controlling the signal having a switched alternating current (AC) waveform.

9. The system of claim 1, the compressor controller processing module (301) determining the time period as a time value between raising edges of consecutive time durations.

10. The system of claim 1, the thermostat unit (100) sending configuration information to the compressor controller unit (300).

11. The system of claim 10, the thermostat unit (100) encoding a value of $T_{max}$ in the configuration information.

12. The system of claim 1, the compressor controller unit (300) further including:

a data structure (317) that maps the temperature difference to the updated compressor speed; and and
the compressor controller processing module (301) access the data structure (317) to determine an updated compressor speed.

13. A thermostat unit (100) for controlling an air conditioning unit, the air conditioning unit including a variable speed compressor (303), the thermostat unit (100) comprising:

a temperature sensor (109) measuring an ambient temperature of an environmentally controlled space;
a switching module (105) controlling conduction of a signal (200) over a controlled time interval, the signal having a switched alternating current (AC) waveform; **characterized by**
a thermostat processing module (107) determining a temperature difference between the ambient temperature and a set temperature, determines a duty cycle corresponding to the temperature difference from the temperature difference divided by $T_{max}$ times 50% plus 50% (EQ.4), and controlling the switching module (105) in accordance with the duty cycle, the signal (200) being electrically conducted during an activate time duration and electrically blocked during a deactivated time duration over a time period, the duty cycle specifying the activated time duration and the deactivated time duration.

14. A thermostat unit (100) of claim 13, the switching module including an electrical component that electrically closes during the activated time duration and electrically opens during the deactivated time duration.

**Patentansprüche**

1. Ein System zur Steuerung einer Klimaanlageneinheit, die Klimaanlageneinheit einen Verdichter (303) variabler Drehzahl enthaltend, das System enthaltend:

   eine Thermostateinheit (100) enthaltend:

      einen Temperatursensor (109) messend eine Umgebungstemperatur eines umgebungskontrollierten Raums;
      ein Schaltmodul (105) kontrollierend die Leitung eines Signals (200) über ein kontrolliertes Zeitintervall; **gekennzeichnet durch**
      ein Thermostatverarbeitungsmodul (107) bestimmend eine Temperaturdifferenz zwischen der Umgebungstemperatur und einer gegebenen Temperatur, verarbeitend die Temperaturdifferenz zwischen einem Intervall zwischen $T_{max}$ und $-T_{max}$, bestimmend einen Tastgrad entsprechend der Temperaturdifferenz aus der Temperaturdifferenz geteilt **durch** besagte $T_{max}$ mal 50% plus 50% (Gleichung EQ. 4) und kontrollierend das Schaltmodul (105) in Übereinstimmung mit dem Tastgrad, wobei das Signal über eine Zeitspanne während einer Aktivierungszeitdauer elektrisch geleitet wird und während einer Deaktivierungszeitdauer elektrisch blockiert ist, wobei der Tastgrad die Aktivierungszeitdauer und die Deaktivierungszeitdauer festlegt; und
      eine Verdichterkontrolleinheit (300) enthaltend:

         ein Signalschnittstellenmodul überwachend das Signal (200) aus der Thermostateinheit (100); und
         ein Verdichterkontrollverarbeitungsmodul (301) bestimmend den Tastgrad aus dem Signal (200), bestimmend die Temperaturdifferenz aus dem Tastgrad und bestimmend eine aktualisierte Verdichterdrehzahl aus der Temperaturdifferenz und den Verdichter (303) variabler Drehzahl so steuernd, dass er bei der aktualisierten Verdichterdrehzahl arbeitet.

2. Das System des Anspruchs 1, worin das Schalmodul (105) eine elektrische Komponente enthält, die während der Aktivierungszeitdauer elektrisch schließt und während der Deaktivierungszeitdauer elektrisch öffnet.

3. Das System des Anspruchs 1, worin das Thermostatverarbeitungsmodul (107) die Temperaturdifferenz auf einen positiven begrenzten Wert setzt (Gleichung EQ. 6a), wenn die Temperaturdifferenz größer als näherungsweise $T_{max}$ ist, und die Temperaturdifferenz auf einen negativen begrenzten Wert setzt, wenn die Temperatur geringer als näherungsweise $-T_{max}$ (Gleichung 6b) ist.

4. Das System des Anspruchs 1, wobei das Thermostatverarbeitungsmodul (107) einen Impuls sendet, der eine Impulsdauer geringer als ein Minimalwert hat, wenn der Tastgrad als Null decodiert wird, wobei der Impuls durch das Signal (200) übertragen wird.

5. Das System des Anspruchs 4, wobei das Verdichterkontrollverarbeitungsmodul (301) das dem Tastgrad entsprechende Signal (200) als Null decodiert, wenn die Impulsdauer geringer ist als der Minimalwert.

6. Das System des Anspruchs 1, wobei das Thermostatverarbeitungsmodul (107) ein vorbestimmtes Impulsmuster, das einen Notfallhalt bezeichnet, sendet, wobei das vorbestimmte Impulsmuster auf dem Signal übertragen wird.

**7.** Das System des Anspruchs 6, wobei das Verdichterkontrollverarbeitungsmodul (107) das dem Notfallhalt entsprechende Signal decodiert und den Verdichter (303) variabler Drehzahl anweist, die Rotation einzustellen.

**8.** Das System des Anspruchs 1, wobei das das Signal kontrollierende Schaltmodul (105) eine umgeschaltete Wechselstrom (AC)-Wellenform aufweist.

**9.** Das System des Anspruchs 1, wobei das Verdichterkontrollverarbeitungsmodul (301) das Zeitintervall als einen Zeitwert zwischen steigenden Flanken konsekutiver Zeitdauern bestimmt.

**10.** Das System des Anspruchs 1, wobei die Thermostateinheit (100) Konfigurationsinformationen zur Verdichterkontrolleinheit (300) sendet.

**11.** Das System des Anspruchs 10, wobei die Thermostateinheit (100) einen Wert von $T_{max}$ in die Konfigurationsinformation kodiert.

**12.** Das System des Anspruchs 1, wobei die Verdichterkontrolleinheit (300) weiterhin enthält:

eine Datenstruktur (317), die die Temperaturdifferenz zur aktualisierten Verdichterdrehzahl abbildet; und wobei das Verdichterkontrollverarbeitungsmodul (301) auf die Datenstruktur (317) zugreift, um eine aktualisierte Verdichterdrehzahl zu bestimmen.

**13.** Eine Thermostateinheit (100) zur Steuerung einer Klimaanlageneinheit, die Klimaanlageneinheit einen Verdichter (303) mit variabler Drehzahl enthaltend, die Thermostateinheit (100) enthaltend:

einen Temperatursensor (109) messend eine Umgebungstemperatur eines umgebungskontrollierten Raums; ein Schaltmodul (105) kontrollierend die Leitung eines Signals (200) über ein kontrolliertes Zeitintervall, das Signal eine umgeschaltete Wechselstrom (AC)-Wellenform aufweisend; **gekennzeichnet durch** ein Thermostatverarbeitungsmodul (107) bestimmend eine Temperaturdifferenz zwischen der Umgebungstemperatur und einer gegebenen Temperatur, bestimmend einen Tastgrad entsprechend der Temperaturdifferenz aus der Temperaturdifferenz geteilt **durch** besagtes $T_{max}$ mal 50% plus 50% (Gleichung EQ. 4) und kontrollierend das Schaltmodul (105) in Übereinstimmung mit dem Tastgrad, wobei das Signal (200) über eine Zeitspanne während einer Aktivierungszeitdauer elektrisch geleitet wird und während einer Deaktivierungszeitdauer elektrisch blockiert ist, wobei der Tastgrad die Aktivierungszeitdauer und die Deaktivierungszeitdauer festlegt.

**14.** Eine Thermostateinheit (100) gemäß Anspruch 13, worin das Schalmodul (105) eine elektrische Komponente enthält, die während der Aktivierungszeitdauer elektrisch schließt und während der Deaktivierungszeitdauer elektrisch öffnet.

**Revendications**

**1.** Système de commande d'unité de climatisation, l'unité de climatisation comprenant un compresseur à vitesse variable (303), le système comprenant :

une unité de thermostat (100) comprenant :

un capteur de température (109) mesurant une température ambiante d'un espace à environnement contrôlé ;
un module de commutation (105) commandant la conduction d'un signal (200) sur un intervalle de temps contrôlé ; **caractérisé par**
un module de traitement de thermostat (107) déterminant une différence de température entre la température ambiante et une température de consigne, traitant la différence de température entre une plage entre $Tm_{ax}$ et $-T_{max}$, déterminant un cycle de marche correspondant à la différence de température à partir de la différence de température divisée par ladite $T_{max}$ fois 50 % plus 50 % (EQ.4), et commandant le module de commutation (105) conformément au cycle de marche, le signal étant conduit électriquement pendant une durée activée et bloqué électriquement pendant une durée désactivée pendant une période de temps, le cycle de marche spécifiant la durée activée et la durée désactivée ; et

une unité de commande de compresseur (300) comprenant :

un module d'interface de signal surveillant le signal (200) provenant de l'unité de thermostat (100) ; et
un module de traitement d'unité de commande de compresseur (301) déterminant le cycle de marche à partir du signal (200), déterminant la différence de température à partir du cycle de marche, et déterminant une vitesse de compresseur mise à jour à partir de la différence de température, et ordonnant au compresseur à vitesse variable (303) de fonctionner à la vitesse de compresseur mise à jour.

2. Système selon la revendication 1, le module de commutation (105) comprenant un composant électrique qui se ferme électriquement pendant la durée activée et s'ouvre électriquement pendant la durée désactivée.

3. Système selon la revendication 1, le module de traitement de thermostat (107) réglant la différence de température à une valeur limitée positive (EQ.6a) lorsque la différence de température est supérieure à approximativement $T_{max}$, et réglant la différence de température à une valeur limitée négative lorsque la température est inférieure à approximativement $-T_{max}$ (E.6b).

4. Système selon la revendication 1, le module de traitement de thermostat (107) envoyant une impulsion ayant une durée d'impulsion inférieure à une valeur minimale lorsque le cycle de marche est décodé comme nul, l'impulsion étant transportée par le signal (200).

5. Système selon la revendication 4, le module de traitement d'unité de commande de compresseur (301) décodant le signal (200) correspondant au cycle de marche comme étant nul lorsque la durée d'impulsion est inférieure à la valeur minimale.

6. Système selon la revendication 1, le module de traitement de thermostat (107) envoyant un motif d'impulsion prédéterminé qui désigne un arrêt d'urgence, le motif d'impulsion prédéterminé étant transporté sur le signal.

7. Système selon la revendication 6, le module de traitement d'unité de commande de compresseur (107) décodant le signal correspondant à l'arrêt d'urgence et ordonnant au compresseur à vitesse variable (303) d'arrêter de tourner.

8. Système selon la revendication 1, le module de commutation (105) commandant le signal ayant une forme d'onde à courant alternatif (CA) commuté.

9. Système selon la revendication 1, le module de traitement d'unité de commande de compresseur (301) déterminant la période de temps comme une valeur de temps entre des fronts montants de durées consécutives.

10. Système selon la revendication 1, l'unité de thermostat (100) envoyant des informations de configuration à l'unité de commande de compresseur (300).

11. Système selon la revendication 10, dans lequel l'unité de thermostat (100) code une valeur de $T_{max}$ dans les informations de configuration.

12. Système selon la revendication 1, l'unité de commande de compresseur (300) comprenant en outre :

une structure de données (317) qui applique la différence de température à la vitesse de compresseur mise à jour ; et
le module de traitement d'unité de commande de compresseur (301) accédant à la structure de données (317) pour déterminer une vitesse de compresseur mise à jour.

13. Unité de thermostat (100) pour commander une unité de climatisation, l'unité de climatisation comprenant un compresseur à vitesse variable (303), l'unité de thermostat (100) comprenant :

un capteur de température (109) mesurant une température ambiante d'un espace à environnement contrôlé ;
un module de commutation (105) commandant la conduction d'un signal (200) sur un intervalle de temps contrôlé, le signal ayant une forme d'onde de courant alternatif (CA) commuté ; **caractérisée par**
un module de traitement de thermostat (107) déterminant une différence de température entre la température ambiante et une température de consigne, déterminant un cycle de marche correspondant à la différence de température à partir de la différence de température divisée par $T_{max}$ fois 50 % plus 50 % (EQ.4), et commandant le module de commutation (105) conformément au cycle de marche, le signal (200) étant conduit électriquement pendant une durée activée et bloqué électriquement pendant une durée désactivée pendant une période de temps, le cycle de marche spécifiant la durée activée et la durée désactivée.

**14.** Unité de thermostat (100) selon la revendication 13, le module de commutation comprenant un composant électrique qui se ferme électriquement pendant la durée activée et s'ouvre électriquement pendant la durée désactivée.

FIG. 1

FIG. 2

<u>300</u>

FIG. 3

FIG. 4

FIG. 5

<u>600</u>

Algorithm subroutine (input: $T_{set}$, $T_{cycle}$)

Sample ambient temperature as $T_{room}$ — 601

$T_{diff} = T_{room} - T_{set}$ — 603

605 — $T_{diff} >= T_{max}$?

No

Yes

607 — $T_{diff} = T_{max} - 1$

611 — $T_{diff} <= -T_{max}$?

No

Yes

613 — $T_{diff} = -T_{max} + 1$

609 —

$T_{on} = (T_{diff} / T_{max} * 50\% + 50\%) * T_{cycle}$
$T_{off} = T_{cycle} - T_{on}$

Return to main routine (output: $T_{on}$, $T_{off}$)

FIG. 6

$$\underline{700}$$

Compressor control (input: $T_{max}$, $F_{def}$)

$$T_{on} = T_{off} = 0$$
$$F_{speed} = F_{def}$$

701

AC signal is on?

702

Yes

Enable T timer interrupt

703

FIG. 7

800

T timer Interrupt subroutine

AC signal is on? — 801

Yes

No

The previous AC signal is off? — 805

No — 819

Yes

$T_{on}+1$

$T_{diff} = [T_{on} /(T_{on}+T_{off})- 50\%] /50\% * T_{max}$
$T_{on} = 1$
$T_{off} = 0$

— 807

817

$T_{off}+1$

$F_{speed} = f(T_{diff})$ — 811

Adjust compress speed to $F_{speed}$ — 813

Return

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4856286 A
- US 5309730 A